# FASCICULE DE BREVET EUROPEEN

(11) **EP 2 089 273 B1**
(45) Date de publication et mention de la délivrance du brevet: **08.06.2011**
(21) Numéro de dépôt: 07870354.3
(22) Date de dépôt: 29.11.2007
(51) Int. Cl.: B64C 5/02, B64C 11/00, B64C 39/06, B64D 27/02

(54) **AVION A EMPENNAGES ARRIERES ANNULAIRES**
FLUGZEUG MIT RINGFÖRMIGEM HECK
AIRCRAFT WITH REAR ANNULAR TAIL

(30) Priorité: 30.11.2006 FR 0655199
(43) Date de publication de la demande: 19.08.2009
(73) Titulaire: AIRBUS OPERATIONS (S.A.S), 31060 Toulouse (FR)
(72) Inventeur: CAZALS, Olivier, F-31700 Daux (FR); DRUOT, Thierry, F-31240 Saint-Jean (FR)
(74) Mandataire: Schmit, Christian Norbert Marie
(86) Numéro de dépôt international: PCT/FR2007/001959
(87) Numéro de publication internationale: WO 2008/081098

(56) Documents cités:
- EP-A1- 1 616 786
- WO-A-2004/074093
- DE-A1- 19 919 626
- DE-U1- 20 111 224
- FR-A- 1 177 330
- FR-A- 2 411 128
- FR-A- 2 759 971
- US-A- 3 301 509
- US-A- 6 102 332
- US-B1- 6 592 073

## Description

La présente invention appartient au domaine des avions comportant une propulsion arrière et des empennages arrières.

Plus particulièrement l'invention propose une architecture comportant un ensemble d'empennages arrière d'avion formant une structure annulaire refermée sur elle-même, associée à un ou plusieurs moteurs de propulsion situés également dans la partie arrière de l'avion. L'arrière-plan technologique est illustré par le document FR-A-1177330.

Sur les avions de transport propulsés par des moteurs à réaction ou par des turbomoteurs tels que des moteurs à hélices non carénées, Unducted Fan ou UDF suivant une terminologie anglo-saxone, les empennages arrières comportent le plus souvent dans une forme dite de base des surfaces aérodynamiques sensiblement verticales, l'empennage vertical, et d'autres sensiblement horizontales, l'empennage horizontal, fixées au fuselage dans sa partie arrière, surfaces aérodynamiques qui assurent la stabilité de l'avion en vol et permettent son contrôle au moyen de gouvernes, de direction et de profondeur, fixées aux dites surfaces aérodynamiques.

Cette forme d'empennage conventionnelle de base est largement utilisée sur de nombreux avions civils de transport comme par exemple sur les avions Airbus A320.

Dans des formes moins fréquentes d'utilisation, en particulier sur les avions de transports civils, l'empennage horizontal est fixé à l'empennage vertical soit en haut de ce dernier, forme d'empennages dite en T, par exemple sur l'avion Bae146, soit dans une position intermédiaire en hauteur, forme d'empennage dite en croix, par exemple sur l'avion Aerospatiale SE210 Caravelle.

Dans d'autres formes également connues, l'empennage vertical comporte deux surfaces aérodynamiques verticales fixées aux extrémités de l'empennage horizontal, forme d'empennage dite en H, comme par exemple sur l'avion Nord2500 Noratlas.

Une autre forme connue d'empennages arrière consiste en deux surfaces inclinées entre la verticale et l'horizontale formant un V et dont la combinaison assure à la fois les fonctions des surfaces aérodynamiques verticales et horizontales. Ce type d'empennage dit papillon est utilisé notamment sur l'avion CM170 Fouga Magister.

Le choix d'une forme d'empennage pour un avion dépend en général de considérations aérodynamiques, de considérations structurales et est influencé par la position et le type des moteurs de propulsion qui génèrent des contraintes également d'ordre aérodynamique et d'ordre structural mais aussi de sûreté de fonctionnement dans la mesure où des défaillances d'un moteur tel qu'un éclatement de turbine ne doit pas entraîner de conséquences telles sur les empennages que l'avion ne puisse plus être contrôlé.

Sur les avions actuels, les formes d'empennage différentes de la forme de base et pour lesquelles les surfaces aérodynamiques des empennages ne sont pas individuellement fixées au fuselage correspondent à des architectures d'avion avec empennage arrière, mais cependant les formes connues, en T, en croix, en H ou en V restent très proche dans leur conception de la forme de base sans optimisation aérodynamique et structurale globale de l'ensemble des empennages avec les moteurs de propulsion.

La présente invention propose une architecture d'empennage arrière d'un avion compatible avec l'installation de turboréacteurs, en particulier de turboréacteurs de génération moderne à grand taux de dilution, ou de propulseurs à hélices non carénées à l'arrière d'un avion, et qui optimise les empennages par une combinaison des surfaces aérodynamiques des dits empennages formant une surface fermée dite annulaire simple ou double.

Un ensemble d'empennages arrière suivant l'invention est adapté à un avion, comportant un fuselage, une aile et au moins un moteur de propulsion fixé dans une partie arrière du fuselage, c'est à dire une partie du fuselage située en arrière de l'aile suivant un axe X longitudinal de l'avion.

L'ensemble d'empennages comporte des surfaces aérodynamiques fixées dans la partie arrière du fuselage, et est constitué essentiellement de surfaces aérodynamiques sensiblement horizontales et de surfaces aérodynamiques sensiblement verticales agencées pour former une structure annulaire comportant au moins un anneau fixé au fuselage dans lequel anneau est maintenu au moins un moteur arrière.

La structure de l'ensemble d'empennages arrière comporte :
- deux surfaces aérodynamiques inférieures sensiblement planes et sensiblement horizontales fixées au fuselage, du coté d'une emplanture de chacune des dites surfaces aérodynamiques inférieures, de manière sensiblement symétrique par rapport à un plan de symétrie vertical XZ de l'avion ;
- deux surfaces aérodynamiques sensiblement planes et sensiblement verticales, chacune des dites deux surfaces aérodynamiques verticales étant fixée par une extrémité inférieure à une extrémité d'une surface aérodynamique inférieure opposée à l'emplanture de la surface aérodynamique inférieure considérée ;
- une surface aérodynamique supérieure sensiblement plane et sensiblement horizontale fixée par des extrémités en envergure à des extrémités supérieures des surfaces aérodynamiques verticales.

Par leur agencement les surfaces aérodynamiques inférieures, verticales et supérieure, fixées au fuselage par les surfaces aérodynamiques, forment un anneau.

Avantageusement les surfaces aérodynamiques inférieures, supérieure et verticales, au moins pour certaines d'entre elles, sont pourvues d'éléments mobiles formant des gouvernes aérodynamiques qui permettent d'assurer le contrôle de l'avion.

Afin de contrôler les écoulements aérodynamiques dans la zone des empennages, les surfaces aérodynamiques de l'ensemble d'empennages sont fixées entre elles par des éléments de raccordement et d'assemblage courbes.

Dans un mode de réalisation une dérive centrale est fixée au fuselage dans sa partie inférieure et fixée à la surface aérodynamique supérieure dans une partie haute de ladite dérive centrale de sorte que l'ensemble d'empennages détermine une structure à deux anneaux de résistance et de rigidité renforcée.

Pour répondre à des considérations de maintenance des moteurs chaque structure d'un anneau comporte avantageusement :
- une zone d'ouverture de la surface aérodynamique inférieure située au niveau du fuselage ou à proximité du fuselage, la dite zone d'ouverture comportant des moyens de verrouillage-déverrouillage des parties de ladite surface aérodynamique inférieure situées de part et d'autre de ladite zone d'ouverture ;
- une zone d'articulation au niveau d'une partie de la surface aérodynamique supérieure formant une partie de l'anneau considéré, ladite zone d'articulation permettant un mouvement vers le haut par une rotation d'axe sensiblement parallèle à un axe longitudinal X de l'avion lorsque les moyens de verrouillage-déverrouillage sont en position déverrouillée.

L'invention concerne également un avion comportant un tel ensemble d'empennages arrière sans dérive centrale et un moteur de propulsion fixé à la surface aérodynamique supérieure et sous ladite surface aérodynamique supérieure par un mât support.

Dans ce cas un puits de maintenance sensiblement vertical traverse utilement le fuselage, puits de maintenance de dimensions et d'emplacement tels que le moteur peut être descendu et monté sensiblement verticalement au travers du puits depuis ou vers sa position fixée à la surface aérodynamique supérieure.

Des trappes assurent la fermeture des ouvertures inférieure et supérieure du puits, en exploitation normale de l'avion, pour assurer la continuité des formes aérodynamiques du fuselage.

L'invention concerne aussi un avion comportant un tel ensemble d'empennages arrière et des moteurs de propulsions agencés sensiblement dans le ou les anneaux formés par les empennages, les moteurs étant chacun fixé au fuselage par un mât support.

L'invention concerne aussi un avion comportant un tel ensemble d'empennages arrière avec une dérive centrale et des moteurs de propulsion agencés sensiblement dans les anneaux formés par l'ensemble d'empennage arrière, les moteurs étant chacun fixé à la dérive centrale par un mât support.

La description de différents modes de réalisation de l'invention est faite en référence aux figures qui montrent des vues schématiques de différents d'agencements d'empennages annulaires pour un avion suivant l'invention :
- figure 1 : illustration d'un avion bimoteur fixés à l'arrière comportant un empennage suivant un mode de réalisation ;
- figure 2a : détail de la zone arrière de l'avion de la figure 1 empennages en position fonctionnelle ;
- figure 2b : détail de la zone arrière de l'avion de la figure 1 empennage en position maintenance moteur sur un côté ;
- figure 3 : illustration d'un avion biréacteur arrière comportant un empennage suivant un mode de réalisation ;
- figures 4 : illustration d'un avion tri-réacteurs avec un réacteur arrière et comportant des empennages suivant un autre mode de réalisation.

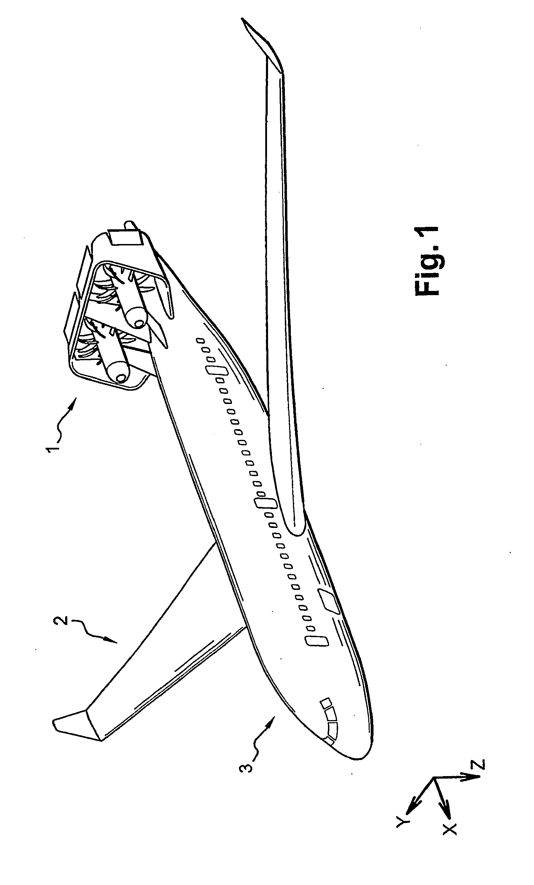

La figure 1 présente un avion comportant un exemple d'architecture d'un ensemble d'empennages arrière 1 suivant l'invention.

Par ensemble d'empennages arrière il convient de comprendre un ensemble de surfaces aérodynamiques formant les empennages et situé en arrière d'une aile 2 par rapport à un axe X longitudinal de l'avion et orienté positivement vers l'avant qui correspond sensiblement à la direction de déplacement de l'avion en vol.

L'expression « surface aérodynamique » est ici pris dans le sens d'une structure dont la conformation est appropriée à la création de forces aérodynamiques de portance comme par exemple une aile d'avion, un empennage horizontal ou une dérive d'avion.

De manière conventionnelle, l'aile 2 et l'ensemble d'empennages 1 sont fixés à un fuselage 3 de l'avion de forme allongé.

De manière conventionnelle, l'avion comporte un trièdre de référence défini par l'axe longitudinal X, par un axe vertical Z orienté positivement vers le bas de l'avion lorsque l'avion est dans une position horizontale et par un axe Y perpendiculaire aux axes X et Z et positif vers la droite de l'avion dans le sens du vol.

Les axes X et Z déterminent un plan vertical de symétrie de l'avion et les axes X et Y détermine un plan horizontal de référence de l'avion.

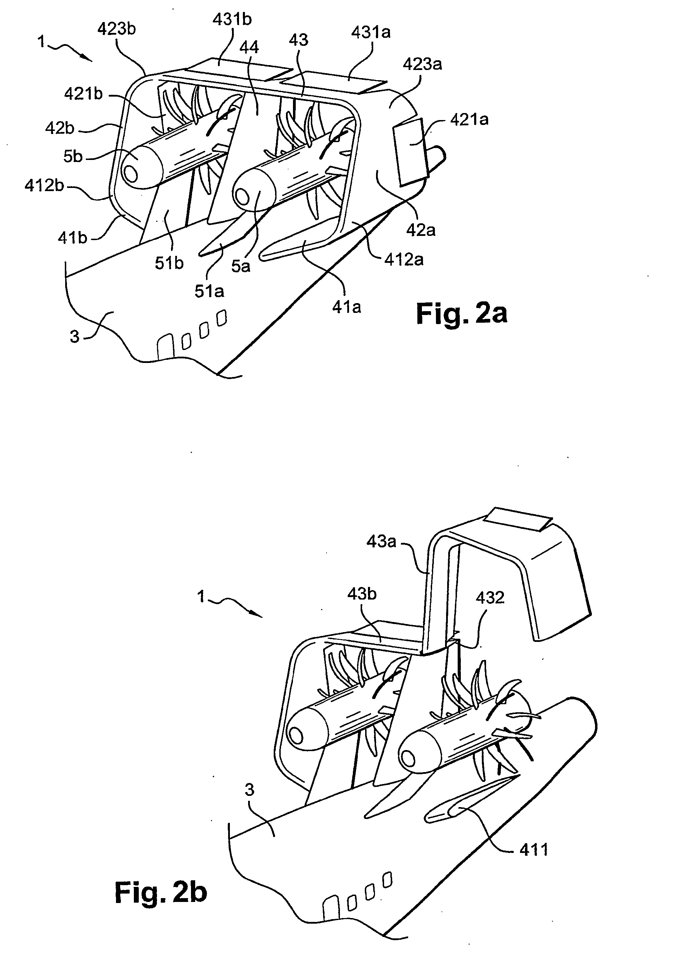

Dans l'architecture présentée sur la figure 1, dont un détail est présenté sur la figure 2a, l'ensemble d'empennages comporte des premières surfaces aérodynamiques inférieures 41a, 41b sensiblement horizontales et fixées au fuselage 3 par des emplantures des dites surfaces aérodynamiques inférieures.

Les dites surfaces aérodynamiques inférieures sont agencées sensiblement symétriquement par rapport au plan vertical XZ de symétrie de l'avion et forment un empennage horizontal inférieur.

Comme sur l'illustration de la figure 1 et de la figure 2a les surfaces aérodynamiques inférieures 41a, 41b ne sont pas obligatoirement strictement parallèles au plan horizontal de référence XY et forment le cas échéant un dièdre comme le plus souvent pratiqué pour des raisons de comportement aérodynamique en général.

Des secondes surfaces aérodynamiques 42a, 42b sensiblement verticales, dites surfaces aérodynamiques verticales, au nombre de deux, sont agencées à des extrémités opposées aux emplantures des surfaces aérodynamiques inférieures 41a, 41b de telle sorte que lesdites deux surfaces verticales s'étendent au-dessus des surfaces aérodynamiques inférieures, c'est à dire en direction des Z négatifs.

Une troisième surface aérodynamique, dite supérieure, 43, sensiblement horizontale est également agencée au-dessus des surfaces aérodynamiques inférieures et maintenue par des extrémités en envergure de la dite surface aérodynamique supérieure fixées à des extrémités supérieures des surfaces verticales 42a, 42b.

Dans l'agencement qui vient d'être décrit, les surfaces aérodynamiques inférieures 41a, 41b, les surfaces aérodynamiques verticales 42a, 42b et la surface aérodynamique supérieure 43 forment une structure annulaire, définissant un canal aérodynamique, fixée au fuselage 3 au niveau des emplantures des surfaces aérodynamiques inférieures, le fuselage réalisant la fermeture de la structure annulaire.

De préférence, les surfaces aérodynamiques 41a, 41b, 42a, 42b, 43 sont des surfaces portantes du type profil de voilure sensiblement planes et sont reliées entre elles par des formes aérodynamiques courbes 412a, 412b, 423a, 423b assurant un raccordement aérodynamique et structural progressif.

Dans une forme préférée de réalisation, toutes ou parties des surfaces aérodynamiques de l'ensemble d'empennages (1) sont pourvues dans des zones de bord de fuite des dites surfaces aérodynamiques de gouvernes aérodynamiques, c'est à dire d'éléments mobiles utilisés pour le contrôle de l'avion.

En particulier les surfaces aérodynamiques verticales 42a, 42b sont avantageusement pourvues de gouvernes, dite gouvernes de lacet, sensiblement verticales 421a, 421b pour le contrôle de l'avion autour de l'axe vertical Z et les surfaces aérodynamiques inférieures 41a, 41b et ou supérieure 43 sont pourvues de gouvernes, dites gouvernes de tangage, sensiblement horizontales 431a, 431b pour le contrôle de l'avion autour de l'axe Y.

Dans un mode de réalisation des gouvernes de profondeur ne sont présentes que sur les surfaces aérodynamiques inférieures ou, comme dans les exemples illustrés sur les figures, que sur la surface aérodynamique supérieure.

Dans un mode de réalisation, particulièrement adapté à la réalisation d'un avion comportant deux moteurs arrières comme illustré sur les figures 1, 2a, 2b une quatrième surface aérodynamique verticale 44, dite dérive centrale, est agencée sensiblement dans le plan de symétrie vertical XZ de l'avion, fixée à une de ses extrémités, dite emplanture, au fuselage 3 et à son autre extrémité, dite extrémité supérieure, à la surface aérodynamique supérieure 43.

Dans cet agencement comportant une dérive centrale 44 l'ensemble d'empennages annulaire comporte une structure en double anneaux déterminant deux canaux aérodynamiques séparés par ladite dérive centrale.

La dérive centrale 44 permet d'augmenter la résistance structurale et la rigidité de l'ensemble d'empennages 1 et comporte le cas échéant une ou plusieurs gouvernes de direction.

Suivant l'invention, comme illustré sur les figures 1, 3 et 4, un ou des moteurs 5, 5a, 5b sont agencés dans le canal aérodynamique ou les canaux aérodynamiques de l'ensemble d'empennages annulaire.

Les moteurs sont par exemple des réacteurs, tels que des réacteurs modernes à grand taux de dilution, ou des moteurs à hélice non carénés tels que des turbomoteurs dont les hélices sont conçues pour la propulsion d'avions subsoniques rapides.

Dans le cas d'un agencement comportant deux moteurs arrières 5a, 5b la dérive centrale 44, lorsqu'elle est mise en oeuvre, est avantageusement renforcée pour assurer une protection d'un moteur contre des débris projetés par l'autre moteur dans le cas d'un éclatement.

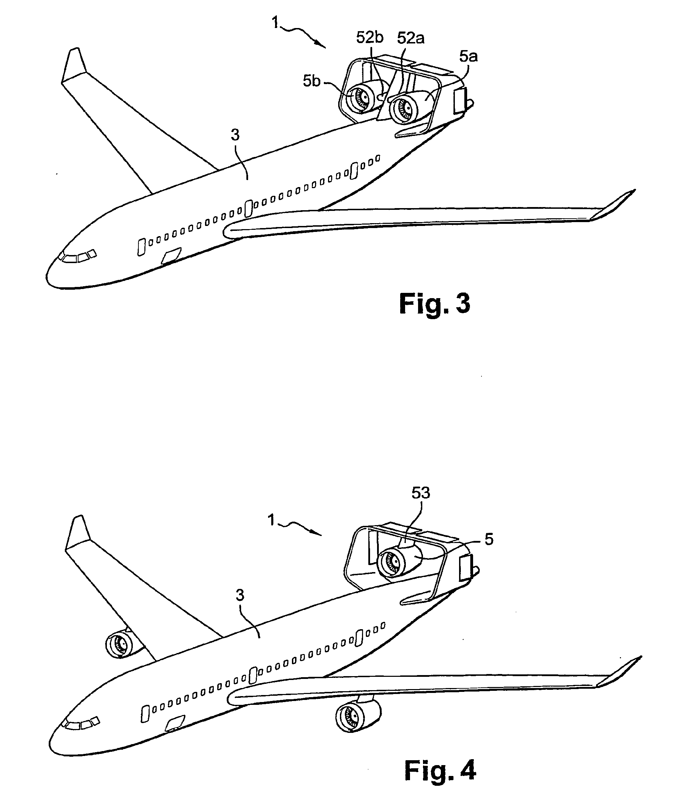

Chaque moteur est maintenu par une structure porteuse 51a, 51b, 52a, 52b, 53 telle qu'un mat d'accrochage qui est fixé au fuselage 3 (cas illustré sur la figure 1) ou à une surface aérodynamique de l'empennage annulaire, notamment à la surface aérodynamique supérieure 43 (cas illustré sur la figure 4) ou la dérive centrale 44 (cas illustré sur la figure 3).

Dans ces agencements des moteurs arrières de l'avion de préférence les moteurs 5, 5a, 5b sont placés suivant la direction de l'axe longitudinal X de sorte que les bruits rayonnés par les dits moteurs, bruits rayonnés par des hélices non carénées et ou des entrées d'air et ou des tuyères des dits moteurs de propulsion, se trouvent masqués, au moins en partie, par les différentes surfaces d'empennages.

Dans une forme préférée de réalisation de l'invention dans le cas d'un avion comportant deux moteurs arrières et une dérive centrale 44, les mats d'accrochage des moteurs 5a, 5b sont fixés au fuselage 3 ou à la dérive centrale 44.

Dans ce cas l'ensemble d'empennages 1 détermine deux anneaux, un premier anneau étant formé par une surface aérodynamique inférieure 41a, une surface aérodynamique verticale 42a, une partie 43a de la surface aérodynamique supérieure 43 située du côté de la surface aérodynamique inférieure considérée par rapport au plan de symétrie vertical XZ de l'avion et la dérive centrale 44, et un second anneau formé par l'autre surface aérodynamique inférieure 41b, l'autre surface aérodynamique verticale 42b, une partie 43b de la surface aérodynamique supérieure située du côté de la surface aérodynamique inférieure considérée par rapport au plan de symétrie vertical XZ de l'avion et la dérive centrale 44.

Chaque anneau, pour des besoins de maintenance, en particulier pour des opérations d'entretien, de montage ou de dépose de moteurs, peut être ouvert et pour cela comporte comme illustré sur la figure 2b pour un des deux anneaux :
- une zone d'ouverture 411 de la surface aérodynamique inférieure 41a située à proximité du fuselage 3 ;
- une zone d'articulation 432 de la partie 43a située entre l'extrémité supérieure de la dérive centrale 44 et une extrémité de la surface aérodynamique supérieure située du côté de l'anneau considéré.

La zone d'articulation 432 est agencée pour permettre une rotation vers le haut d'un sous-ensemble articulé de l'ensemble d'empennages 1 autour d'un axe sensiblement parallèle à l'axe X longitudinal de l'avion.

En conditions normales d'exploitation de l'avion, l'anneau est fermé et des moyens de verrouillage-déverrouillage, non représentés, assure en condition « verrouillé » la continuité structurale de la surface aérodynamique inférieure 41a dans la zone de l'ouverture 411.

La zone d'ouverture 411 est située proche du fuselage 3 ou à la limite entre le fuselage 3 et la surface aérodynamique inférieure 41a.

En condition « déverrouillé », qui correspond à une période d'opérations de maintenance de l'avion, la zone d'ouverture 411 libère le sous-ensemble articulé de l'anneau qui peut être basculé vers le haut de l'avion autour de la zone d'articulation 432.

En basculant ainsi vers le haut le sous-ensemble articulé de l'anneau, d'une part l'accès au moteur 5a associé à l'anneau considéré est rendu possible pour l'examen, la maintenance, le cas échéant le remplacement de pales du moteur et des capots dudit moteur peuvent être ouvert pour accéder à des organes internes en vu de réaliser des opérations de maintenance sans dépose du moteur et d'autre part l'espace situé sous le moteur 5a est libéré de tout obstacle et ledit moteur peut être descendu ou remonté par des moyens de levage conventionnels pour une mise en place ou pour un remplacement.

Dans un mode préféré de réalisation, la zone d'articulation 432 est agencée prés de l'extrémité supérieure de la dérive centrale 44, ce qui permet de réaliser la partie articulée de l'anneau au moyen d'un ensemble structural unique apte à présenter une rigidité importante.

De manière symétrique un agencement identique ou équivalent permet d'effectuer les opérations de maintenance sur l'autre moteur 5b.

Dans un agencement avec un seul moteur 5 arrière tel que présenté sur la figure 4 pour un avion comportant par exemple en outre des moteurs sous les ailes, avantageusement le moteur 5 est accroché en position axiale sous la surface aérodynamique supérieure. Dans ce cas il n'est pas utilisé de dérive centrale.

Avantageusement un puits de maintenance, non représenté, est agencé dans le fuselage à la verticale du moteur. Le puits de maintenance est obturé par des trappes en conditions normales d'exploitation de l'avion, et ses dimensions sont telles que le moteur peut être descendu ou monté sensiblement verticalement au travers du fuselage lorsque les trappes du puits sont ouvertes.

Ainsi l'invention proposée permet de réaliser un ensemble d'empennages pour un avion comportant un ou plusieurs moteurs situés dans la partie arrière de l'avion qui présente des formes continues sur les plans aérodynamiques et structuraux et qui assure une intégration des moteurs favorable sur les plans aérodynamiques et acoustiques sans pénaliser les opérations de maintenances nécessaires sur les moteurs.

## Revendications

1. Fuselage (3) d'avion comportant un ensemble d'empennages arrière (1) et au moins un moteur (5, 5a, 5b) de propulsion, de type turboréacteur ou propulseur à hélices non carénées, fixé dans une partie arrière du fuselage, en arrière d'une l'aile (2) suivant un axe X longitudinal de l'avion, ledit ensemble d'empennages comportant des surfaces aérodynamiques fixées dans la partie arrière du fuselage, ledit ensemble d'empennages étant **caractérisé en ce qu'**il est constitué essentiellement de :
- deux surfaces aérodynamiques inférieures (41a, 41b) sensiblement planes et sensiblement horizontales fixées au fuselage (3), du coté d'une emplanture de chacune des dites surfaces aérodynamiques inférieures, de manière sensiblement symétrique par rapport à un plan de symétrie vertical XZ de l'avion ;
- deux surfaces aérodynamiques sensiblement planes et sensiblement verticales (42a, 42b), chacune des dites deux surfaces aérodynamiques verticales étant fixées par une extrémité inférieure à une extrémité d'une surface aérodynamique inférieure (41a, 41b) opposée à l'emplanture de la surface aérodynamique inférieure considérée ;
- une surface aérodynamique supérieure (43) sensiblement plane et sensiblement horizontale fixée par des extrémités en envergure à des extrémités supérieures des surfaces aérodynamiques verticales (42a, 42b) ;
les dites surfaces aérodynamiques inférieures, verticales et supérieure formant une structure annulaire, fermée par le fuselage (3), comportant au moins un anneau dans lequel dit au moins un anneau est maintenu le au moins un moteur.

2. Fuselage d'avion suivant la revendication 1 dans lequel une ou des surfaces aérodynamiques inférieures (41a, 41b), supérieure (43) et verticales (42a, 42b) de l'ensemble d'empennages arrière (1) sont pourvues d'éléments mobiles formant des gouvernes aérodynamiques.

3. Fuselage d'avion suivant la revendication 1 ou la revendication 2 dans lequel les surfaces aérodynamiques sensiblement planes de l'ensemble d'empennages arrière sont fixées entre elles par des éléments de raccordement et d'assemblage courbes.

4. Fuselage d'avion suivant l'une des revendications 1 à 3 dont l'ensemble d'empennages arrière comporte une dérive centrale (44) fixée au fuselage (3) dans une partie inférieure de ladite dérive centrale et fixée à la surface aérodynamique supérieure (43) dans une partie haute de ladite dérive centrale, ledit ensemble d'empennages arrière déterminant une structure annulaire à deux anneaux.

5. Fuselage d'avion suivant la revendication 4 dans lequel chaque structure d'un anneau de l'ensemble d'empennages arrière comporte :
- une zone d'ouverture (411) de la surface aérodynamique inférieure (41a, 41b) située au niveau du fuselage (3) ou à proximité du fuselage, la dite zone d'ouverture comportant des moyens de verrouillage-déverrouillage des parties de ladite surface aérodynamique inférieure situées de part et d'autre de ladite zone d'ouverture ;
- une zone d'articulation (432) au niveau d'une partie (43a, 43b) de la surface aérodynamique supérieure (43) formant une partie de l'anneau considéré, ladite zone d'articulation permettant un mouvement vers le haut par une rotation d'axe sensiblement parallèle à un axe longitudinal X de l'avion lorsque les moyens de verrouillage-déverrouillage sont en position déverrouillée.

6. Avion comportant un fuselage (3) suivant l'une des revendications 1 à 3 comportant un ensemble d'empennages arrière (1) et un moteur (5) de propulsion fixé à la surface aérodynamique supérieure (43) et sous ladite surface aérodynamique supérieure par un mât support (53).

7. Avion suivant la revendication 6 comportant un puits de maintenance sensiblement vertical traversant le fuselage (3), ledit puits de maintenance étant de dimensions et ayant un emplacement tels que le moteur (5) peut être descendu et monté sensiblement verticalement au travers dudit puits depuis ou vers sa position fixée à la surface aérodynamique supérieure (43).

8. Avion comportant un fuselage suivant l'une des revendications 1 à 5 dans lequel des moteurs (5a, 5b) de propulsions sont agencés sensiblement dans le ou les anneaux formés par l'ensemble d'empennages arrière (1), lesdits moteurs étant chacun fixé au fuselage par un mât support (51a, 51b).

9. Avion comportant un fuselage suivant la revendication 4 ou la revendication 5 dans lequel des moteurs (5a, 5b) de propulsion sont agencés sensiblement dans les anneaux formés par l'ensemble d'empennage arrière (1), lesdits moteurs étant chacun fixé à la dérive centrale (44) par un mât support (52a, 52b).

## Claims

1. An aircraft fuselage (3) comprising a rear set of tail units (1) and at least one propulsion engine (5, 5a, 5b), of the turbojet or non-streamlined propeller type, fixed in a rear part of the fuselage, behind a wing (2) along a longitudinal axis X of the aircraft, said set of tail units comprising aerodynamic surfaces fixed in the rear part of the fuselage, said set of tail units being **characterised in that** it comprises essentially:
- two substantially flat and substantially horizontal bottom aerodynamic surfaces (41a, 41b) fixed to the fuselage (3), at a root of each of said bottom aerodynamic surfaces, substantially symmetrically with respect to a vertical symmetry plane XZ of the aircraft;
- two substantially flat and substantially vertical aerodynamic surfaces (42a, 42b), each of said two vertical aerodynamic surfaces being fixed by a bottom end to an end of a bottom aerodynamic surface (41a, 41b) opposite to the root of the bottom aerodynamic surface in question;
- a substantially flat and substantially horizontal top aerodynamic surface (43) fixed by span ends to top ends of the vertical aerodynamic surfaces (42a, 42b);
said bottom, vertical and top aerodynamic surfaces forming an annular structure, closed by the fuselage (3), comprising at least one annulus in which at least one annulus is held at the least one engine.

2. An aircraft fuselage according to claim 1, in which one or more bottom (41a, 41b), top (43) and vertical (42a, 42b) aerodynamic surfaces of the rear set of tail units (1) are provided with movable elements forming aerodynamic rudder units.

3. An aircraft fuselage according to claim 1 or claim 2, in which the substantially flat aerodynamic surfaces of the set of rear tail units are fixed together by curved connection and assembly elements.

4. An aircraft fuselage according to one of claims 1 to 3, wherein the set of rear tail units comprises a central fin (44) fixed to the fuselage (3) in a bottom part of said central fin and fixed to the top aerodynamic surface (43) in a top part of said central fin, said rear set of tail units determining an annular structure with two annuli.

5. An aircraft fuselage according to claim 4, in which each structure of an annulus of the rear set of tail units comprises:
- an opening area (411) for the bottom aerodynamic surface (41a, 41b) situated at the level of the fuselage (3) or close to the fuselage, said opening area comprising means of locking/releasing the parts of said bottom aerodynamic surface situated on each side of said opening area;
- an articulation area (432) at a part (43a, 43b) of the top aerodynamic surface (43), forming a part of the annulus in question, said articulation area allowing an upward movement by rotation with an axis substantially parallel to a longitudinal axis X of the aircraft when the locking/releasing means are in the released position.

6. An aircraft comprising a fuselage (3) according to one of claims 1 to 3, comprising a rear set of tail units (1) and a propulsion engine (5) fixed to the top aerodynamic surface (43) and under said top aerodynamic surface by a supporting pylon (53).

7. An aircraft according to claim 6, comprising a substantially vertical maintenance well passing through the fuselage (3), said maintenance well being of such a size and having a location such that the engine (5) can be lowered and mounted substantially vertically through said well from or to its fixed position on the top aerodynamic surface (43).

8. An aircraft comprising a fuselage according to one of claims 1 to 5, in which propulsion engines (5a, 5b) are arranged substantially in the annulus or annuli formed by the rear set of tail units (1), said engines each being fixed to the fuselage by a supporting pylon (51a, 51b).

9. An aircraft comprising a fuselage according to claim 4 or claim 5, in which propulsion engines (5a, 5b) are arranged substantially in the annuli formed by the rear set of tail units (1), said engines each being fixed to the central fin (44) by a supporting pylon (52a, 52b).

## Patentansprüche

1. Flugzeugrumpf (3), der eine hintere Leitwerkanordnung (1) und wenigstens einen Triebwerksmotor (5, 5a, 5b) des Typs Turbinenstrahltriebwerk oder Triebwerk mit unverkleideten Propellern, der in Richtung einer Längsachse X des Flugzeugs in einem hinteren Teil des Rumpfes hinter einem Flügel (2) befestigt ist, umfasst, wobei die Leitwerkanordnung aerodynamische Oberflächen aufweist, die im hinteren Teil des Rumpfes befestigt sind, wobei die Leitwerkanordnung **dadurch gekennzeichnet ist, dass** sie im Wesentlichen gebildet ist aus:
- zwei unteren aerodynamischen Oberflächen (41a, 41b), die im Wesentlichen eben sind und auf Seiten einer Flügelwurzel jeder der unteren aerodynamischen Oberflächen am Rumpf (3) im Wesentlichen horizontal befestigt sind, so dass sie in Bezug auf eine vertikale Symmetrieebene XZ des Flugzeugs im Wesentlichen symmetrisch sind;
- zwei aerodynamischen Oberflächen, die im Wesentlichen eben und im Wesentlichen vertikal sind (42a, 42b), wobei jede dieser zwei vertikalen aerodynamischen Oberflächen mit einem unteren Ende an einem Ende einer unteren aerodynamischen Oberfläche (41 a, 41 b) gegenüber der Flügelwurzel der betrachteten unteren aerodynamischen Oberfläche befestigt ist;
- einer oberen aerodynamischen Oberfläche (43), die im Wesentlichen eben und im Wesentlichen horizontal ist und mit Spannweitenenden an oberen Enden der vertikalen aerodynamischen Oberflächen (42a, 42b) befestigt ist;
wobei die unteren, vertikalen und oberen aerodynamischen Oberflächen eine ringförmige Struktur bilden, die durch den Rumpf (3) geschlossen ist und wenigstens einen Ring aufweist, wobei in diesem wenigstens einen Ring der wenigstens eine Motor gehalten wird.

2. Flugzeugrumpf nach Anspruch 1, wobei eine oder mehrere der unteren (41a, 41 b), oberen (43) und vertikalen (42a, 42b) aerodynamischen Oberflächen der hinteren Leitwerkanordnung (1) mit beweglichen Elementen versehen sind, die aerodynamische Steuerflächen bilden.

3. Flugzeugrumpf nach Anspruch 1 oder Anspruch 2, wobei die im Wesentlichen ebenen aerodynamischen Oberflächen der hinteren Leitwerkanordnung untereinander durch gekrümmte Verbindungs- und Montagelemente befestigt sind.

4. Flugzeugrumpf nach einem der Ansprüche 1 bis 3, dessen hintere Leitwerkanordnung ein mittiges Leitelement (44) aufweist, das am Rumpf (3) in einem unteren Teil des mittigen Leitelements befestigt ist und an der oberen aerodynamischen Oberfläche (43) in einem oberen Teil des mittigen Leitelements befestigt ist, wobei die hintere Leitwerkanordnung eine ringförmige Struktur mit zwei Ringen festlegt.

5. Flugzeugrumpf nach Anspruch 4, wobei jede Struktur eines Rings der hinteren Leitwerkanordnung umfasst:
- eine Öffnungszone (411) der unteren aerodynamischen Oberfläche (41 a, 41 b), die sich auf Höhe des Rumpfes (3) oder in der Nähe des Rumpfes befindet, wobei diese Öffnungszone Verriegelungs-/Entriegelungsmittel für die Teile der unteren aerodynamischen Oberfläche, die sich beiderseits der Öffnungszone befinden, aufweist;
- eine Schwenkzone (432) auf Höhe eines Teils (43a, 43b) der oberen aerodynamischen Oberfläche (43), die einen Teil des betrachteten Rings bildet, wobei die Schwenkzone eine Bewegung nach oben durch Drehen um eine zur Längsachse X des Flugzeugs im Wesentlichen parallele Achse ermöglicht, wenn die Verriegelungs-/Entriegelungsmittel in der entriegelten Position sind.

6. Flugzeug, das einen Rumpf (3) nach einem der Ansprüche 1 bis 3 enthält, der eine hintere Leitwerkanordnung (1) und einen Triebwerksmotor (5), der an der oberen aerodynamischen Oberfläche (43) und unter dieser oberen aerodynamischen Oberfläche durch einen Tragstiel (53) befestigt ist, umfasst.

7. Flugzeug nach Anspruch 6, das einen im Wesentlichen vertikalen Wartungsschacht aufweist, der durch den Rumpf (3) verläuft, wobei der Wartungsschacht Abmessungen und einen Ort besitzt, derart, dass der Motor (5) durch diesen Schacht aus seiner oder in seine Position, in der er an der oberen aerodynamischen Oberfläche (43) befestigt ist, im Wesentlichen vertikal abgesenkt bzw. angehoben werden kann.

8. Flugzeug, das einen Rumpf nach einem der Ansprüche 1 bis 5 aufweist, wobei die Triebwerksmotoren (5a, 5b) im Wesentlichen in dem Ring oder in den Ringen angeordnet sind, die durch die hintere Leitwerkanordnung (1) gebildet sind, wobei die Motoren am Rumpf jeweils durch einen Tragstiel (51 a, 51 b) befestigt sind.

9. Flugzeug, das einen Rumpf nach Anspruch 4 oder Anspruch 5 aufweist, wobei die Triebwerksmotoren (5a, 5b) im Wesentlichen in den Ringen angeordnet sind, die durch die hintere Leitwerkanordnung (1) gebildet sind, wobei die Motoren jeweils an dem mittigen Leitelement (44) durch einen Tragstiel (52a, 52b) befestigt sind.
